# EUROPEAN PATENT APPLICATION

(11) **EP 1 291 567 A2**
(43) Date of publication of application: **12.03.2003**
(21) Application number: 02019761.2
(22) Date of filing: 04.09.2002
(51) Int. Cl.: F16L 11/20, F16L 11/15, F16L 11/12

(54) **Impermeable metal film and hose having the same**

(30) Priority: 06.09.2001 JP 2001269739
(71) Applicant: Tokai Rubber Industries, Ltd., Komaki-shi, Aichi-ken, 485-8550 (JP)
(72) Inventor: Hibino, Motoshige, Tokai Rubber Industries, Ltd., Komaki-shi, Aichi-ken 485-8550 (JP); Sakakibara, Masashi, deceased (JP)
(74) Representative: HOFFMANN - EITLE

(57) **Abstract**

An impermeable metal film having a bellows shape and used as a fluid-impermeable layer of a fluid transport hose. The, impermeable metal film is produced by molding and heat-treating. After molding metal into a film of the bellows shape, the film is heat-treated to remove residual stress in a specific temperature range which is optimal for improvement in durability against fatigue failure caused by deformation. There can be also provided an impermeable hose including a multilayer structure which has at least one layer of the impermeable metal film incorporated as a fluid-impermeable layer in the impermeable hose.

## Description

### BACKGROUND OF THE INVENTION

### Field of the Invention

The present invention relates to an impermeable metal film and an impermeable hose which is a metal composite hose having the impermeable metal film incorporated therein.

### Background Art

A related-art rubber hose such as an NBR-PVC (a blend of acrylonitrile-butadiene rubber and polyvinyl chloride) hose generally used for transporting automobile fuel has sufficient vibration absorption characteristic and assembly characteristic. The related-art rubber hose, however, cannot sufficiently meet a current demand of high impermeability on an automobile fuel or refrigerant transport hose.

From the point of view of attaching importance to fuel-impermeability of a hose to consider the environment in recent years, there has been proposed a hose using a resin material higher in fuel barrier characteristic than rubber and formed to partially have a bent shape or a corrugated shape (bellows shape) to meet vibration absorption characteristic and assembly characteristic.

More regulation of permeation of fuel or the like in the future is, however, expected. On the other hand, it is necessary for the hose to be adapted to fluid high in penetrability such as hydrogen gas used in a carbon dioxide refrigerant or in a fuel battery. To advance measures to meet this situation, it is therefore necessary to conceive that an impermeable metal film with flexibility secured by molding a thin metal layer expected to have extremely high fluid-impermeability as a barrier layer into a corrugated shape is incorporated in a hose.

For example, Japanese Patent Laid-Open No. 2001-182872 has disclosed a carbon dioxide refrigerant hose having a corrugated inner metal layer, an elastic layer of rubber or resin for covering an outer surface of the metal layer, and a reinforcing layer for further covering an outer surface of the elastic layer. For example, Japanese Utility Model Laid-Open No. 64566/1993 has disclosed a piping multilayer bellows having a plurality of metal layers adjacent to one another.

The impermeable metal film used as described above, however, involves large residual stress because it is obtained by rolling a raw material metal into a thin film and further molding the thin film into a corrugated shape. It has been found that when such an impermeable metal film is directly incorporated in an automobile hose, fatigue failure caused by deformation is apt to occur in the impermeable metal film because the impermeable metal film is repeatedly vibrated and deformed. In this case, the metal cracks so that the fluid-impermeability of the hose is spoiled thoroughly.

In the piping multilayer bellows according to Japanese Utility Model Laid-Open No. 64566/1993, after molding of a stainless steel bellows, the bellows is heat-treated at about 1060°C to remove residual stress remaining in the bellows. The heat treatment is, however, provided for improving corrosion resistance of the bellows constituted by only metal layers. The heat treatment in a temperature range near 1000°C after molding of stainless steel spoils the spring characteristic of stainless steel, so that it is rather undesirable from the point of view of improving durability against fatigue failure caused by deformation.

### SUMMARY OF THE INVENTION

Therefore, an object of the invention is to provide an impermeable metal film particularly improved in durability against fatigue failure caused by deformation, and an impermeable hose as a metal composite hose in which the impermeable metal film is incorporated.

The impermeable metal film and the impermeable hose of the present invention include the following aspects in order to resolve the above-described problems.

An impermeable metal film according to a first aspect has a bellows shape and is used as a fluid-impermeable layer of a fluid transport hose. The impermeable metal film is produced by molding a film of the bellows shape out of metal; and then heat-treating the film to remove residual stress in a predetermined temperature range which is optimal for improvement in durability against fatigue failure caused by deformation.

The concept "impermeable metal film having a bellows shape" means an impermeable metal film having a bellows shape in at least one part in an axial direction. That is, this concept includes an impermeable metal film having any shape such as an impermeable metal film having a bellows shape in the whole length in the axial direction, or an impermeable metal film having a bellows shape in a part or a large part in the axial direction but having a straight or bent tube shape in the other part.

According to another aspect, the metal is selected from the group consisting of iron steel, alloy steel, aluminum, aluminum alloy, copper, copper alloy, nickel, nickel alloy, titanium, and titanium alloy. The alloy steel may include stainless steel.

According to another aspect, the impermeable metal film is made of stainless steel, and the predetermined temperature range is from 150°C to 900°C. The predetermined temperature range is preferably from 250°C to 450°C.

According to another aspect, the bellows shape is a spiral shape having continuous bellows mountain portions or a shape having bellows mountain portions independent of one another.

An impermeable hose according to another aspect includes a multilayer structure wherein the multilayer structure includes at least one layer of an impermeable metal film; and the impermeable metal film is produced by molding metal into the bellows shape; and then heat-treating the metal to remove residual stress in a predetermined temperature range which is optimal for improvement in durability against fatigue failure caused by deformation.

According to another aspect, the multilayer structure includes a resin layer or a rubber layer.

According to another aspect, the multilayer structure includes a reinforcing layer.

According to the present inventor' s examination, the heat treatment to remove residual stress remaining in the molded metal has various technical implications in accordance with the temperature range. To improve durability against fatigue failure caused by deformation of the molded metal, the heat treatment needs to be carried out in a specific temperature range to meet the purpose.

In the first aspect of this invention, the molded impermeable metal film is heat-treated in such a specific temperature range to remove residual stress. Hence, the impermeable metal film exhibits excellent durability against fatigue failure caused by deformation. Moreover, the impermeable metal film has both extremely high fluid-impermeability and flexibility based on the bellows shape. Hence, the impermeable metal film can be used extremely suitably as a fluid-impermeable layer of a fluid transport hose.

The material for forming the impermeable metal film need not be limited. From the point of view of durability against fatigue failure caused by deformation, moldability, availability of the material, etc., the material may be preferably selected from the group consisting of iron steel, alloy steel (including stainless steel), aluminum, aluminum alloy, copper, copper alloy, nickel, nickel alloy, titanium, and titanium alloy. Particularly, the preferable material is stainless steel.

Stainless steel is particularly preferably used as the material for forming the impermeable metal film. For the stainless steel, the heat treatment is carried out in a temperature range of from about 150 °C to about 900°C. If the temperature range used for the heat treatment is lower than about 150°C, there is the possibility that removal of residual stress may be insufficient and, accordingly, improvement of durability against fatigue failure caused by deformation may be insufficient. If the temperature range used for the heat treatment is higher than about 900°C (e.g. 1000°C or higher), there is the possibility that durability against fatigue failure caused by deformation may be inversely spoiled.

For improvement of durability against fatigue failure caused by deformation, it is particularly preferable that the temperature range used for the heat treatment of stainless steel is from 250°C to 450°C.

The bellows shape of the impermeable metal film may be a spiral shape having continuous bellows mountain portions or may be a shape having a plurality of bellows mountain portions independent of one another. The former shape is advantageous in terms of good productivity. The latter shape is advantageous in terms of elasticity and weldability for welding fasteners to opposite end portions of the impermeable metal film.

Further, according to the above-mentioned aspect of the invention, there can be provided an impermeable hose which exhibits high impermeability to a high-osmotic air-conditioning refrigerant or hydrogen gas fuel for a fuel battery car, which has flexibility (elasticity) secured and which is excellent in durability against fatigue caused by repeated deformation in terms of fluid barrier characteristic.

The provision of at least one resin layer and/or at least one rubber layer in the impermeable hose permits the impermeable metal film to be protected from physical injury due to external force and from liquid corrosion, and permits stress imposed on the impermeable hose to be dispersed to thereby improve durability of the impermeable metal film more greatly.

The provision of at least one reinforcing layer in the impermeable hose permits the withstanding pressure of the impermeable hose to be enhanced and permits the impermeable metal film to be protected from physical injury due to external force.

As described above, the impermeable hose has an impermeable metal film having both extremely high fluid-impermeability and flexibility. Hence, the impermeable hose can be preferably used as a fluid transport hose. Moreover, the impermeable hose exhibits excellent durability against fatigue caused by repeated deformation in terms of fluid barrier characteristic. Hence, the impermeable hose can be preferably used as a liquid fuel hose, a gas fuel hose or a refrigerant hose for use in an automobile.

### BRIEF DESCRIPTION OF THE DRAWINGS

Fig. 1 is a schematic view showing the gist of enforcement of a bend vibration test.

Fig. 2 is a cross sectional view of a preferable example of the configuration of an impermeable hose according to the invention.

Fig. 3 is a cross sectional view of another preferable example of the configuration of an impermeable hose according to the invention.

Fig. 4 is a side view of a preferable example of the configuration of an impermeable metal film according to the invention.

Fig. 5 is a side view of another preferable example of the configuration of an impermeable metal film according to the invention.

### DETAILED DESCRIPTION OF THE PREFERRED EMBODIMENTS

Embodiments of the inventions will be described below.

### [Impermeable Hose]

In the impermeable hose according to the invention, at least one layer of an impermeable metal film having a bellows shape is incorporated as a fluid-impermeable layer. Although the other hose-constituting members than the fluid-impermeable layer in the impermeable hose are not limited, various hose-constituting members such as at least one rubber layer; at least one resin layer, and at least one reinforcing layer may be provided desirably in the impermeable hose. These various hose-constituting members such as the fluid-impermeable layer, the rubber layer, the resin layer, and the reinforcing layer may be provided in optional layer portions such as inner, intermediate or outer layer portions in the multilayer structure of the hose.

In a more preferable example of the configuration of the impermeable hose, the impermeable hose may have a multilayer structure constituted by hose-constituting members shown in any one of the following paragraphs (1) to (4), by way of example. In each of these multilayer structures, the left side indicates a hose-constituting member for forming the innermost layer, and hose-constituting members located on the outer layer side are arranged in order in the rightward direction. These layers may be preferably bonded to one another.
(1) layer b/ layer a
(2) layer b/ layer a/ layer c/ layer a
(3) layer a/ layer b/ layer a
(4) layer a/ layer b/ layer a/ layer c/ layer a

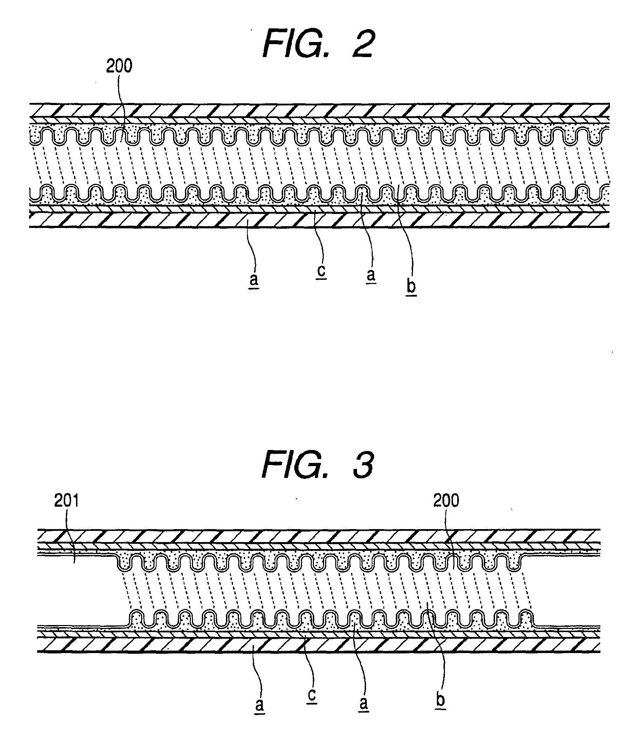

In the paragraphs (1) to (4), the "layer a" means a mono- or multi-layer constituted by a rubber layer and/or a resin layer, the "layer b" means a fluid-impermeable layer, and the "layer c" means a reinforcing layer. The layer a may be constituted by any one of various combinations. In the paragraphs (2) to (4), a plurality of layers a are incorporated but the plurality of layers a may be the same in configuration or may be different in configuration. In addition, examples of paragraph (2) are shown in Figs.2 and 3.

The impermeable metal film constituting the fluid-impermeable layer of the impermeable hose has a bellows shape in at least one part in the axial direction but the overall shape of the impermeable hose is not limited. For example, grooves in the bellows shape of the impermeable metal film may be covered with a rubber or resin layer on the outside so as to be filled with the rubber or resin layer, so that the impermeable hose can be formed to have a straight or bent tube shape wholly smooth. Alternatively, the impermeable hose may be formed to have a bellows shape in the whole length in the axial direction in accordance with the bellows shape of the impermeable metal film, or the impermeable hose may be formed to have a bellows shape in a part or large part in the axial direction and have a straight or bent tube shape as a smooth tube shape in the other part.

Any known method can be used as the method of producing the impermeable hose without any limitation. For example, powder coating or spray coating with a thermoplastic resin may be used for forming a resin layer on an inner circumference and/or an outer circumference of the impermeable metal film having a bellows shape. Alternatively, after a resin layer is formed on an inner circumference and/or an outer circumference of the impermeable metal film before molding into the bellows, these film and layer may be molded into a bellows shape collectively. When a rubber layer is formed on an outer circumference of an impermeable metal film having a bellows shape or on an outer circumference of a combination of an impermeable metal film and a resin layer formed on an inner circumference and/or an outer circumference of the impermeable metal film, the impermeable metal film can be used as a core material so that the impermeable metal film can be covered with the rubber layer by extrusion molding. Hence, it is unnecessary to use a mandrel in extrusion molding of the rubber layer. With respect to the formation of the rubber layer, an elastic rubber layer may be formed by vulcanization or solvent removal after immersing the impermeable metal film or the like in a liquid elastic rubber unvulcanizate or in an electric rubber solution.

The impermeable hose can be used for transporting any kind of fluid (liquid or gas) without limitation. The impermeable hose is particularly suitable as a fluid transport hose for use in an automobile. For example, the impermeable hose can be preferably used as a liquid fuel hose, a gas fuel hose or a refrigerant hose in an automobile. More specifically, the impermeable hose can be used optionally as a hose for fuel such as gasoline or alcohol-added gasoline in a gasoline automobile, as a hose for fuel such as hydrogen gas or methanol in a fuel battery car, as a hose for a refrigerant such as chlorofluorocarbons or carbon dioxide or as an air hose.

### [Impermeable Metal Film]

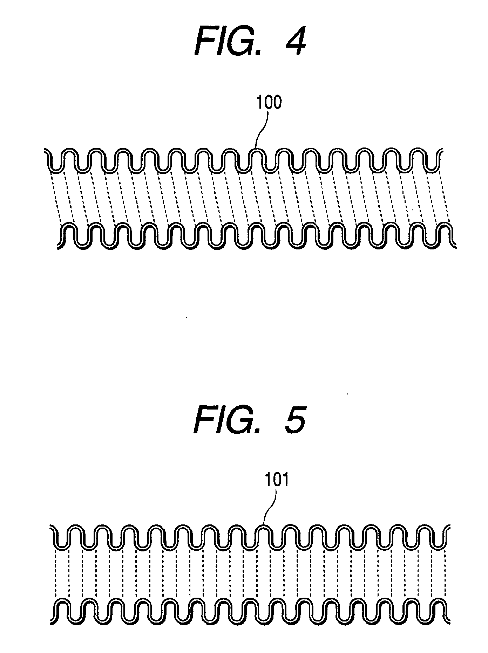

The impermeable metal film used as a fluid-impermeable layer of an impermeable hose is molded into a bellows shape. As shown in Figs. 4 and 5, the bellows shape may be a spiral shape 100 having continuous bellows mountain portions or may be a shape 101 having a plurality of bellows mountain portions independent of one another. The impermeable metal film may be formed to have a bellows shape in at least one part in the axial direction. That is, the impermeable metal film may be formed to have any shape. For example, as shown in Fig.2, the impermeable metal film may be formed to have a bellows shape 200 in the whole length in the axial direction. Alternatively, the impermeable metal film may be formed to have a bellows shape 200 in a part or a large part in the axial direction and have a straight shape 201 or bent tube shape in the other part.

The metal material for forming the impermeable metal film is not limited in kind. The metal material is preferably selected from the group consisting of iron steel, alloy steel (conceptually including stainless steel), aluminum, aluminum alloy, copper, copper alloy, nickel, nickel alloy, titanium, and titanium alloy. Especially, stainless steel is preferably used.

The thickness of the impermeable metal film is not limited. The preferred thickness varies in accordance with the kind of the metal material for forming the impermeable metal film. For example, in the case of an impermeable metal film of stainless steel, the thickness is preferably in a range of from about 50 µm to about 500 µm. As the method of producing the impermeable metal film having a bellows shape, for example, a metal tube may be formed from a metal thin film before the metal tube is processed into a bellows shape by use of molding rolls. Alternatively, there maybe used a liquid pressure bulge molding method in which a metal tube is imported into a bulge molding tool so that the metal tube is processed into a bellows shape by liquid pressure given from the inside of the metal tube.

The impermeable metal film having a bellows shape according to the invention is heat-treated to remove residual stress in a specific temperature range optimal for improvement of durability against fatigue failure caused by deformation after molded into the bellows shape. Further preferably, the time required for the heat treatment in the specific temperature range is determined. If these heat-treating conditions vary, durability against fatigue failure caused by deformation is not always improved, that is, durability may be inversely worsened according to circumstances.

The specific temperature range used for the heat treatment cannot be determined uniquely because it varies in accordance with the kind of the metal material for forming the impermeable metal film. When the material for forming the impermeable metal film is stainless steel, the specific temperature range used for the heat treatment is from 150°C to 900°C, further preferably from 250°C to 450°C. More specifically, the heat treatment in a temperature range of from 150°C to 900°C for 5 minutes or longer is preferred, and the heat treatment in a temperature range of from 250°C to 450°C for 5 minutes or longer is especially preferred. In the case of stainless steel, the heat treatment in a temperature range near 1000°C or higher is insignificant or harmful to improvement of durability against fatigue failure caused by deformation.

Incidentally, the heat treatment and cooling after the heat treatment may be preferably carried out not in air but in an oxygen-free atmosphere such as a nitrogen atmosphere in order to prevent metal surface oxidation. For example, it is preferable that the heat treatment is carried out in an oxygen-free furnace in a nitrogen atmosphere and cooling is then carried out in the furnace.

### [Resin Layer, Rubber Layer and Reinforcing Layer]

The material for forming the resin layer cannot be determined uniquely because the preferred kind of the material varies in accordance with the layer portion where the resin layer is provided in the multilayer structure of the hose. Generally, a thermoplastic resin such as a polyolefin resin, a polyester resin or a polyamide resin is especially preferred from the point of view of balance among heat resistance, mechanical property and elasticity. More specifically, polyethylene (PE), polypropylene (PP), polyketone, polybutylene terephthalate (PBT), polyamide-6 (PA6), polyamide-11 (PA11), polyamide-12 (PA12), or the like, is preferred. The thickness of the resin layer can be determined suitably in accordance with the portion in use and the purpose of use without any limitation.

Also the material for forming the rubber layer cannot be determined uniquely because the preferred kind of the material varies in accordance with the layer portion where the rubber layer is provided in the multilayer structure of the hose. Generally, preferred examples of the material are fluoro rubber (FKM), epichlorohydrin rubber (ECO), acrylonitrile-butadiene rubber (NBR), hydrogenated acrylonitrile-butadiene rubber (H-NBR), chloroprene rubber (CR), urethane rubber (U), fluorosilicone rubber (FVMQ), chlorosulfonated polyethylene rubber (CSM), chlorinated polyethylene rubber (CPE), butyl rubber (IIR), chlorinated butyl rubber (Cl-IIR), brominated butyl rubber (Br-IIR), acrylic rubber (ACM), ethylene-propylene rubber (EPR), ethylene-propylene-diene terpolymer rubber (EPDM), natural rubber (NR), isoprene rubber (IR), styrene-butadiene rubber (SBR), butadiene rubber (BR), silicone rubber (Q), and blends of these rubbers. The thickness of the rubber layer can be determined suitably in accordance with the portion in use and the purpose of use without any limitation.

Any known structure can be also used as the reinforcing layer. For example, a reinforcing layer formed by spirally knitting or braiding reinforcing yarn of aramid fiber or the like or a wire braided layer formed by braiding or spirally knitting wire may be preferably used as the reinforcing layer.

### [Examples]

### [Example 1: Production of Impermeable Metal Film]

A thin plate of SUS316L (0.20 mm thick) was slit into a predetermined width and end portions of the thin plate were connected to each other by welding to thereby produce a metal tube. Immediately after that, the metal tube was draw-formed to thereby produce an impermeable metal film having a bellows shape. In this manner, 15 film samples in total were produced as numbered from 1 to 15 in Table 1 (which will be provided in the end of this specification).

These bellows-shaped impermeable metal films included bellows tubes (S type) each shaped spirally to have continuous bellows mountain portions, and bellows tubes (Atype) each shaped to have a plurality of bellows mountain portions independent of one another. The types of bellows shapes of the impermeable metal films according to the respective samples were classified by the column "Shape" in Table 1 so that the S type was expressed as "S" and the A type was expressed as "A". The bellows tubes of the impermeable metal films in the respective samples were produced in four combinations in terms of difference in inner diameter, outer diameter, thickness and pitch. The inner and outer diameters (unit: mm) of the bellows tube in each sample were shown in the column "Diameter" in Table 1. The thickness (unit: mm) of the tube wall portion of the bellows tube in each sample was shown in the column "Thickness". The pitch (length between peaks of adjacent mountains) of the bellows tube in each sample was shown in the column "Pitch".

As is obvious from Table 1, the fifteen bellows-shaped impermeable metal film samples are classified into five groups by inner diameter, outer diameter, thickness and pitch, or by bellows tube shape type. Each of the five groups includes three impermeable metal film samples.

Then, one of the three impermeable metal film samples belonging to each group was not heat-treated, another sample was heat-treated in an oxygen-free furnace in a nitrogen atmosphere at 350°C for 30 minutes, and the last sample was heat-treated in the same manner at 1100°C for 30 minutes. Each of the two samples heat-treated was cooled to the ordinary temperature in the state in which the sample was left in the furnace.

### [Example 2: Durability Test]

Each of the bellows-shaped impermeable metal film samples was subjected to a bend vibration test particularly in consideration of durability against vibration after assembling of an automobile.

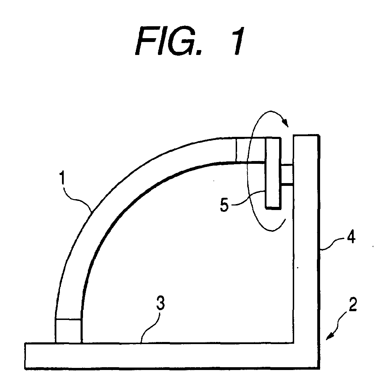

That is, each of the bellows-shaped impermeable metal film samples 300 mm long was covered with a thin silicone resin tube so that the sample exhibited a predetermined bent state suitable for the test. Then, as shown in Fig. 1, after one end of the bellows tube sample 1 prepared thus was fixed perpendicularly to a base portion 3 of a test stand 2, the other end of the bellows tube sample 1 was connected perpendicularly to a rotary plate 5 provided in an erected pillar portion 4 of the test stand 2 in the condition that the bellows tube sample 1 was bent with a bending radius R of 120 (mm). Hoses attached into an engine room of an automobile are practically used in the same attachment state as in the bellows tube sample 1.

Incidentally, the other end portion of the bellows tube sample 1 was connected to a position eccentric by 15 mm from the center of rotation of the rotary plate 5 so that the other end of the bellows tube sample 1 could rotate freely around the axis. Hence, when the rotary plate 5 rotated, the other end of the bellows tube sample 1 was repeatedly deformed with an amplitude of ±15 mm in vertical and lateral directions in the condition that the bellows tube sample 1 was bent with a bending radius R of 120 (mm) while one end of the bellows tube sample 1 was fixed. In this manner, the rotary plate 5 was rotated at a rotational speed of 450 rpm.

The test was applied to each of the bellows tube samples with 100 hours' (2700000 vibrations') durability as a target value. Each bellows tube sample was once released from the test system every 1 hour to check cracking of the impermeable metal film. The test was terminated at a point of time when the impermeable metal film cracked. When the impermeable metal film had not cracked yet, the bellows tube sample was further subjected to the test.

The number of hours of durability of each of the bellows tube samples was shown in the column "Time to Crack (Hr)" in Table 1.

### [Example 3: Durability Test of Impermeable Hose]

As was obvious from Table 1, samples 8, 11 and 14 exhibited durability of 100 hours or longer. Hence, the bellows-shaped impermeable metal film in each of the samples 8, 11 and 14 was provided as the innermost layer and then extrusion-coated with 2.5 mm-thick EPDM unvulcanized rubber. The rubber was further coated with a reinforcing layer obtained by braiding aramid-based reinforcing yarn. The reinforcing layer was further extrusion-coated with 1.5 mm-thick EPDM unvulcanized rubber. Then, vulcanization was performed in the condition of 150°C X 30 minutes to thereby form an impermeable hose.

Each of the impermeable hoses obtained thus was subjected to a 100 hours' bend vibration test in the same manner as in Example 2. Then, after the rubber layers and the reinforcing layer were removed from the hose, the bellows-shaped impermeable metal film was observed. As a result, there was no cracking in each sample.

**[Table 1]**

| | Shape | Diameter | Thickness | Pitch | Heat treatment: X | Time to Crack (Hr) |
|---|---|---|---|---|---|---|
| 1 | S | Φ7XΦ11.5 | 0.26 | 2 | None | 13 |
| 2 | | | | | 350°C*30min | 20 |
| 3 | | | | | 1100°C*30min | 2 |
| 4 | S | Φ7XΦ11.5 | 0.2 | 2.6 | None | 20 |
| 5 | | | | | 350°C*30min | 72 |
| 6 | | | | | 1100°C*30min | 3 |
| 7 | S | Φ7XΦ11.5 | 0.2 | 2 | None | 23 |
| 8 | | | | | 350°C*30min | ≥100 |
| 9 | | | | | 1100°C*30min | 4 |
| 10 | S | Φ5.6XΦ8.2 | 0.15 | 2 | None | 92 |
| 11 | | | | | 350°C*30min | ≥500 |
| 12 | | | | | 1100°C*30min | 30 |
| 13 | A | Φ5.6XΦ8.2 | 0.15 | 2.5 | None | 96 |
| 14 | | | | | 350°C*30min | ≥500 |
| 15 | | | | | 1100°C*30min | 36 |

## Claims

1. An impermeable metal film having a bellows shape and used as a fluid-impermeable layer of a fluid transport hose.

2. A method of producing an impermeable film having a belows shape and used as a fluid-impermeable layer of a fluid transport hose, the impermeable metal film being produced by
molding a film in the bellows shape out of metal; and then heat-treating the film to remove residual stress in a predetermined temperature range which is selected to improve durability against fatigue failure caused by deformation.

3. An impermeable metal film having a bellows shape and used as a fluid-impermeable layer of a fluid transport hose, the impermeable metal film is produced by
molding a film in the bellows shape out of metal; and then heat-treating the film to remove residual stress in a predetermined temperature range which is optimal for improvement indurability against fatigue failure caused by deformation.

4. The impermeable metal film according to claim 1 or 3, wherein the metal is selected from the group consisting of iron steel, alloy steel, aluminum, aluminum alloy, copper, copper alloy, nickel, nickel alloy, titanium, and titanium alloy.

5. The impermeable metal film according to claim 4, wherein the alloy steel includes stainless steel.

6. The impermeable metal film according to claim 1 or 3, wherein the impermeable metal film is made of stainless steel; and the predetermined temperature range is from 150°C to 900°C.

7. The impermeable metal film according to claim 6, wherein the predetermined temperature range is from 250°C to 450°C.

8. The impermeable metal film according to any one of claims 1 and 3 to 7, wherein the bellows shape is a spiral shape having continuous bellows mountain portions.

9. The impermeable metal film according to any one of the claims 1 and 3 to 7, wherein the bellows shape has bellows mountain portions independent of one another.

10. An impermeable hose comprising:
a multilayer structure:
wherein the multilayer structure includes at least one layer of an impermeable metal film; and
the impermeable metal film is produced by molding a film in the bellows shape out of metal; and then heat-treating the film to remove residual stress in a predetermined temperature range which is optimal for improvement in durability against fatigue failure caused by deformation.

11. The impermeable hose according to claim 10, wherein the multilayer structure includes a resin layer or a rubber layer.

12. The impermeable hose according to claim 10 or 11, wherein the multilayer structure includes a reinforcing layer.

13. The impermeable hose according to claim 10, 11 or 12, wherein the metal is selected from the group consisting of iron steel, alloy steel, aluminum, aluminum alloy, copper, copper alloy, nickel, nickel alloy, titanium, and titanium alloy.

14. The impermeable hose according to claim 13, wherein the alloy steel includes stainless steel.

15. The impermeable hose according to claim 10, wherein the impermeable metal film is made of stainless steel; and the predetermined temperature range is from 150°C to 900° C.

16. The impermeable hose according to claim 15, wherein the predetermined temperature range is from 250°C to 450°C.

17. The impermeable hose according to any one of the claims 10 and 12 to 16, wherein the bellows shape is a spiral shape having continuous bellows mountain poortions.

18. The impermeable hose according to any one of claims 10 and 12 to 16, wherein the bellows has bellows mountain portions independent of one another.

19. A hose for transporting fluid with high-penetrability, comprising an impermeable metal film,
wherein
the impermeable metal film is produced by molding a film in the bellows shape out of metal; and then heat-treating the metal to remove residual stress in a predetermined temperature range which is optimal for improvement in durability against fatigue failure caused by deformation.
